# EUROPÄISCHE PATENTSCHRIFT

(11) **EP 1 332 965 B1**
(45) Veröffentlichungstag und Bekanntmachung des Hinweises auf die Patenterteilung: **06.04.2005**
(21) Anmeldenummer: 02028940.1
(22) Anmeldetag: 24.12.2002
(51) Int. Cl.: B64D 45/00

(54) **Schleuse zum Führerstand eines Verkehrsmittels, insbesondere zum Cockpit eines Verkehrsflugzeuges**
Cockpit access control device for a transport system, especially for an aircraft
Sas d'accès à un poste de commande d'un moyen de transport, notamment d'un avion

(30) Priorität: 05.02.2002 DE 10204544
(43) Veröffentlichungstag der Anmeldung: 06.08.2003
(73) Patentinhaber: Airbus Deutschland GmbH, 21129 Hamburg (DE)
(72) Erfinder: Rössner, Bernd, 21244 Rosengarten (DE); Sprenger, Wilfried, 21698 Harsfeld Issendorf (DE)
(74) Vertreter: Hansmann, Dierk, Dipl.-Ing.

(56) Entgegenhaltungen:
- BE-A- 759 331
- FR-A- 2 044 529
- US-A- 3 658 277

## Beschreibung

Die Erfindung betrifft eine Zugangseinrichtung zum Führerstand eines Verkehrsmittels, insbesondere zum Cockpit eines Verkehrsflugzeuges, wobei der Führerstand über einen Zugangsbereich mit der Passagierkabine verbunden ist.

Im Luftverkehrsbetrieb besteht zunehmend die Gefahr von Übergriffen von Personen, die randalierend oder terrorisierend ein gesamtes Verkehrsflugzeug sowie die Passagiere, die Piloten und die Flugbegleiter extrem gefährden können. Allein die Möglichkeit des unkontrollierten Zutritts von Personen zu Führerständen in Verkehrsmitteln - insbesondere zu Flugzeug-Cockpits - kann die Sicherheit des Betriebs und das Leben der Passagiere bedrohen. Auch beim Betreiben anderer öffentlicher Verkehrsmittel besteht die Gefahr für das Verkehrsmittel, insbesondere für Bahn, Autobus oder Schiff, sowie den darin zu transportierenden Passagieren. In der Praxis wird die Gefahrensituation immer dann kritisch, wenn keine geeigneten Maßnahmen gegen mögliche Eindringlinge entgegengesetzt werden können.

Zum verbesserten Schutz von Führerständen, beispielsweise eines Flugzeug-Cockpits sind verstärkte schusssichere Türen bekannt. Eine solche Maßnahme ergibt zwar erhöhten passiven Schutz, doch etwaige Angreifer können dabei nicht aktiv bekämpft oder gar unschädlich gemacht werden.

Bekannt sind beispielsweise bei Banken und anderen sicherheitskritischen Einrichtungen Sicherheitsschleusen, die einen abschottbaren Raum schaffen. Eine Schleuse besitzt den speziellen Vorteil, dass die darin sich aufhaltenden Personen vor dem Zutritt visuell, beispielweise per Kamera, per Sichtfenster oder anderweitig, überprüfbar sind. Außerdem ist es im Gefahrenfall möglich, die Abschottungsfunktion der Schleuse zur aktiven Bekämpfung von Eindringlingen zu nutzen. Die einfachste Art einer Schleuse stellt ein sogenannter Windfang in Gebäuden dar, der zwei übliche Schwenktüren aufweist. Diese benötigen jedoch entsprechenden Platz, der in Verkehrsmitteln meist nicht zur Verfügung steht.

Bei einer anderen Schleusen-Lösung kommen Schiebetüren zur Anwendung, was zum einen eine große Abdichtfläche bedingt, zum anderen müssen im Automatisierungsfall die Türen für den Öffnungs- und Schließvorgang einzeln angesteuert werden. Da bei vorliegender Aufgabenstellung aus Sicherheitsgründen die Schleusenoberfläche auch gegen Gewaltanwendung, Schusswaffen und Feuer resistent sein soll, sind entsprechende Verstärkungen erforderlich, was bei einer Anwendung von Schiebetüren viel Gewicht kostet. Auch verlangt die individuelle Automatik-Betätigung der Schiebetüren eine relativ aufwendige Ansteuerung.

Ein weiteres Schleusenkonzept verwendet das Drehtürprinzip, wobei es hauptsächlich um die wärmesparende Abschottung eines Gebäudeinnenraums von der Außenatmosphäre geht bei gleichzeitiger Gewährleistung eines sich gegensinnig bewegendend Publikumstroms nach innen und außen. Hierbei ist die in der Draufsicht kreisförmige Drehtür nach Art eines Sterns in einzelne Segmente aufgeteilt. Seitlich am Drehzylinder einwirkende Bürsten sollen dabei der Luftspaltabdichtung dienen. Mit dieser beschriebenen Konstruktion ist ein erheblicher Platzbedarf verbunden, der die Anwendung einer derartigen Drehtür in einem Verkehrsmittel eher ausschließt. Auch kann eine Druckdichtigkeit nicht gewährleistet werden, was für die zuvor erwähnte Abschottungsfunktion wichtig ist, um im Schleusenraum für eine aktive Bekämpfung beispielsweise Reizgas einleiten zu können und gleichzeitig angrenzende Räume, wie Führerraum, Cockpit, Passagierkabine oder Fahrgastraum nicht zu beeinflussen.

Aus FR-A-2044529 ist eine Drehschleuse gezeigt, die für den geregelten Zugang zu Gebäuden vorgesehen ist. Maßnahmen für eine spezielle Anwendung in Passagierflugzeugen sind nicht erkennbar.

Aus US-A-3 658 277 ist eine Drehschleuse als Sicherheitseinrichtung für den Zugang zum Steuerstand eines Flugzeuges gedacht. Die Drehschleuse weist mehrere Öffnungen auf, die einen gleichzeitigen Zugang zu mehreren angeschlossenen Räumen ermöglicht. Somit können auch mehrere Personen aus verschiedenen Richtungen gleichzeitig die Drehschleuse betreten. Die Schutzwirkung ist somit eingeschränkt, da einzelne Personen in der Schleuse nicht wirkungsvoll beeinflusst werden können.

Somit ist es Aufgabe der Erfindung, eine gattungsgemäße Zugangseinrichtung zu Führerständen, vorzugsweise zu Flugzeug-Cockpits, so auszubilden, dass Platzbedarf und Oberfläche minimiert sind sowie eine einfache und gewichtsminimierte Konstruktion erreicht ist und weiterhin eine Abschottung sowie mehrere variable Zugänge/Ausgänge der Zugangseinrichtung gewährleistet werden können.

Diese Aufgabe wird bei einer gattungsgemäßen Zugangseinrichtung durch die im Patentanspruch 1 genannten Maßnahmen gelöst.

Dabei ist insbesondere vorteilhaft, dass mit der vorteilhaften Geometrie der Schleuse eine platzsparende und den derzeitigen Platzverhältnissen im Cockpitbereich eines Verkehrsmittels angepasste Einrichtung geschaffen wurde, die wirkungsvoll als Abwehrzone gegen Eindringlinge genutzt werden kann. Dabei kann in einer Gefahrensituation der Schleusenraum durch besondere Maßnahmen wie beispielsweise Injektion von Reizgas, Sperrung der Luftzufuhr etc aktiv gegen einen Angreifer genutzt werden. In diesem Fall ist die Schleuse bezüglich des Innendrucks derart abschottbar, dass die angrenzenden Räume (z.B. Führerraum/Cockpit, Fahrgastraum/Kabine) unbeeinflusst bleiben.

Weiterbildungen und vorteilhafte Ausgestaltungen sind in den Ansprüchen 2 bis 14 angegeben. Weitere Vorteile ergeben sich aus der nachfolgenden Detailbeschreibung.

Die Erfindung ist nachfolgend anhand eines Ausführungsbeispiels beschrieben und zeichnerisch dargestellt. In den Figuren sind gleiche Bauteile mit gleichen Bezugszeichen versehen.

Es zeigen:
- Fig. 1: eine Explosionsdarstellung einer erfindungsgemäßen Zugangseinrichtung mit vier Zugangs-/Ausgangs-Sektoren,
- Fig. 2: eine schematische Schnittzeichnung der Zugangseinrichtung gemäß Fig. 1,
- Fig. 3: die Draufsicht einer weiteren Ausführungsform einer Schleuse mit sechs Sektoren,
- Fig. 4: den Schleuseneinbau im Vorderrumpf eines Verkehrsflugzeugs,
- Fig. 5: einen Konstruktionsentwurf für den unteren Bereich der Schleuse mit Antrieb und
- Fig. 6: eine Abdichtungsmöglichkeit des Schleusenzugangs.

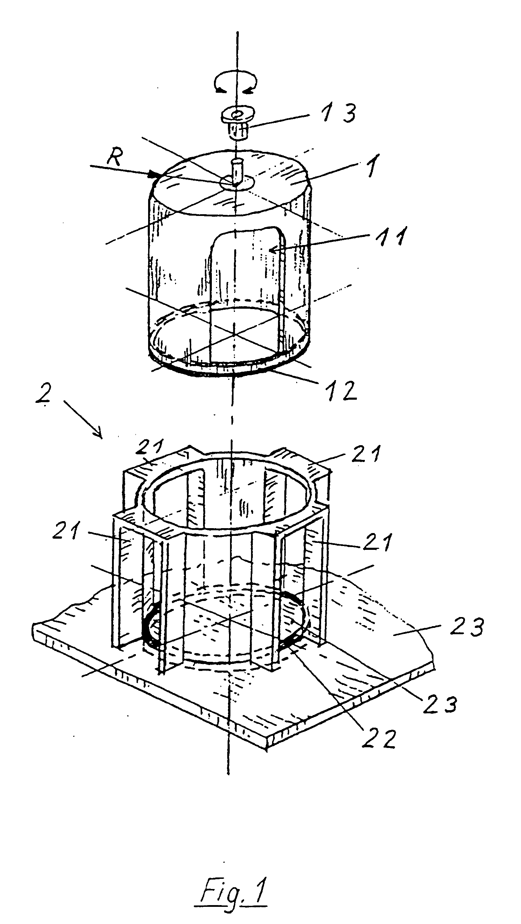

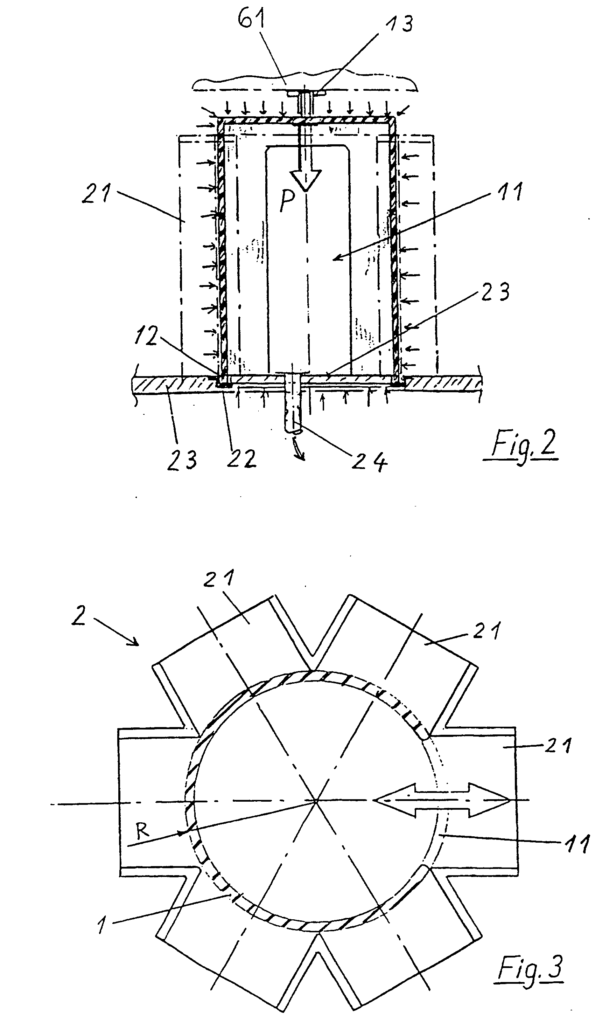

In Fig. 1 ist das der Erfindung zugrundeliegende prinzipielle Konzept einer Zugangseinrichtung zu einem Führerstand in Form einer drehbaren zylindrischen Schleuse 1 dargestellt, welche über einen Schleusenzugang 11 verfügt. Die glockenförmige und hier gezeigte nach unten offene Schleuse 1 dreht sich in einer festen Rahmenstruktur 2, welche hier vier Zugangs/Ausgangs-Sektoren 21 aufweist und auf einer Bodenplatte 23 befestigt ist. Am unteren Ende der Schleuse 1 ist ein Ringprofil 12 integriert, das in einer Ringnut 22 der Bodenplatte 23 gelagert ist. Die obere Lagerung der Schleuse 1 wird von einem Zapfenlager 13 übernommen. Das Zapfenlager 13 ist vorzugsweise an einer Deckenstruktur 61 einer Passagierkabine 6 (siehe Fig. 2) befestigt. Die Schleusenfunktion ergibt sich nun dergestalt, dass je nach Position des Schleusenzugangs 11 der Zutritt nur von einem der vier Sektoren 21 möglich ist, während die drei anderen gesperrt bleiben. Auf einen Eingabebefehl hin bewegt sich die Schleuse 1 in die angewählte Position und wird dort fixiert, so dass nur in einem bestimmten Sektor 21 der Zugang/Ausgang erfolgen kann.

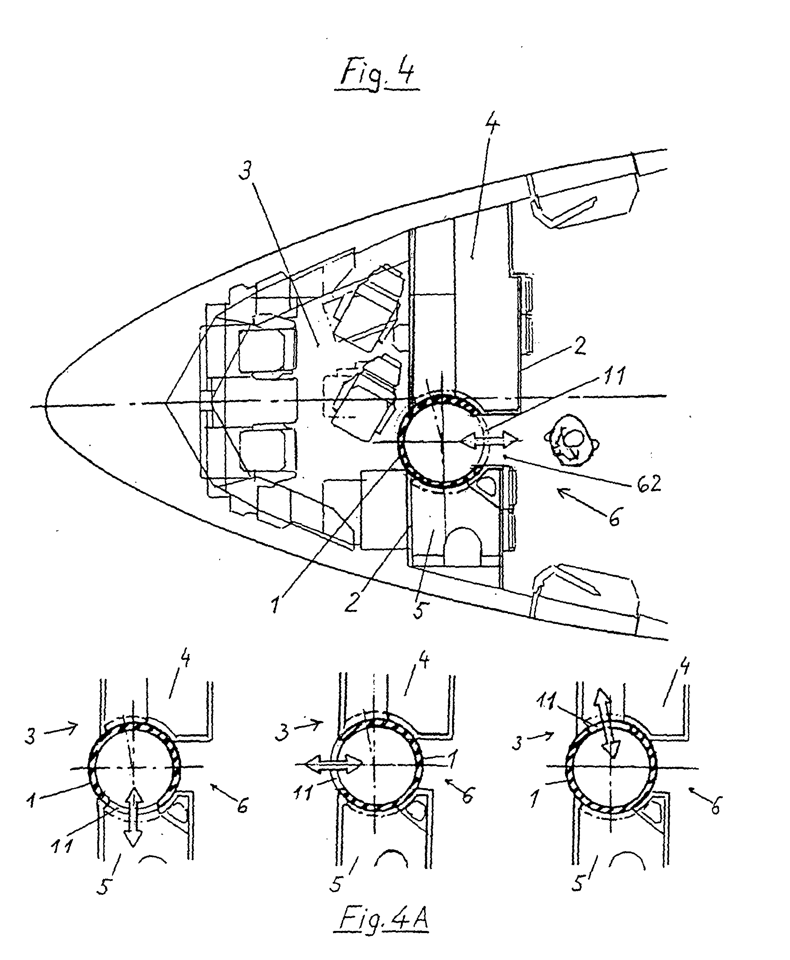

Durch hier nicht dargestellte Mittel (Kamera, Sichtfenster) prüft der Verantwortliche, welche Person Zugang zur Schleuse 1 wünscht oder wer sich in ihr befindet. Durch Auslösung eines Steuerbefehls wird nach der Prüfung der Person der Schleusenzugang 11 zum entsprechenden Ausgangssektor 21 bewegt und die Person kann die Schleuse 1 verlassen.
Durch die zylindrische Geometrie der Schleuse 1 bei kleinem Radius R ist die Oberflächengröße der Schleuse 1 minimierbar, so dass bei der Auskleidung mit schusssicherem Material Gewicht eingespart werden kann. Für die Schleuse 1 ist vorzugsweise hochfestes schusssicheres Material vorzusehen, welches in den Gewichtsanforderungen einer im Flugzeugbau leichten Bauweise entspricht. Beispielsweise ist ein Polyamidgewebe einsetzbar, welches unter dem Namen CETEX HPPE (Firma Ten Cate, Niederlande) bekannt ist.
Aufgrund der günstigen Geometrie lässt sich die Schleuse 1 auch auf beengtem Raum installieren. In Fig. 4 ist eine Installation in einer Passagierkabine 6 eines Verkehrsflugzeugs im Cockpitbereich als Zugangseinrichtung 1 zum Führerstand dargestellt.

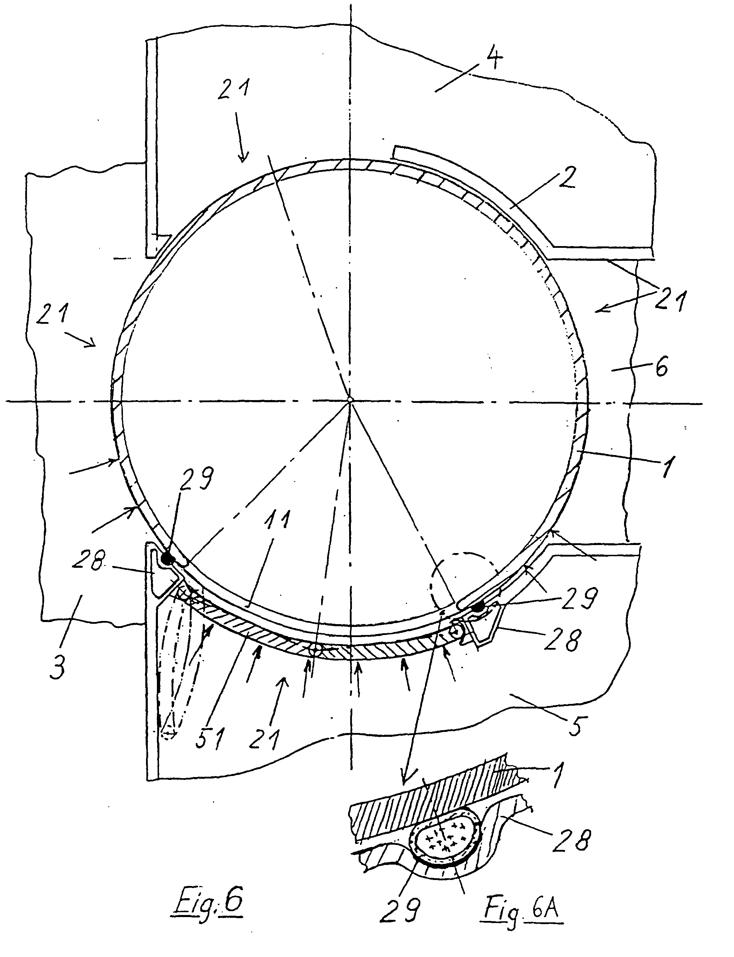

In Fig. 2 ist durch kleine Pfeile verdeutlicht, wie die Kraft des Kabineninnendrucks auf die Schleuse 1 einwirkt, wenn die Schleuse 1 druckdicht ausgeführt ist und die Schleusenatmosphäre mittels einer Luftleitung 24 zwecks Bekämpfung eines Eindringlings evakuiert wird. Die Luftleitung 24 führt beispielsweise zu in Verkehrsflugzeugen üblichen (hier nicht gezeigten ) Dekompressionsklappen oder es wird durch Verbindung mit der Außenatmosphäre ermöglicht, den Druck anzugleichen. Durch den eintretenden kurzfristigen Luftentzug bzw. den Sauerstoffmangel kann ein Eindringling kampfunfähig gemacht werden. Auch dient die Luftleitung 24 dem Druckausgleich, sollte in der Schleuse 1 ein Explosionskörper gezündet werden. Die auf die Oberseite der Schleuse 1 wirkende resultierende Druckkraft (P) drückt das Ringprofil 12 in die Nut 22 der Bodenplatte 23, so dass dort eine weitgehende Druckdichtigkeit erreicht wird. Die Abdichtung des Rands des Schleusenzugangs 11 wird anhand von Fig. 6 näher beschrieben, woraus auch hervorgeht, dass die Schleusenabschottung nur in einer fixen Position bzw. in einem bestimmten Sektor 21 vorgenommen wird. Das heißt, dass die Schleuse 1 vor Aktivierung der Luftevakuierung in die entsprechende Position gedreht werden muss. Infolge der Druckkraft (P) wird die Schleuse 1 über Reibung in der Nut 22 zusätzlich fixiert, was einer Verdrehung entgegenwirkt. Bezüglich der Druckbeaufschlagung der Schleusenwandung bietet die zylindrische Form Festigkeitsvorteile.

Eine weitere, nicht gezeigte Variante der erfindungsgemäßen Schleuse 1 ist möglich, wenn die untere Öffnung des zylindrischen Glockenkörpers durch einen Boden abgeschlossen wird. In diesem Fall kann die Drehlagerung durch ein unteres Zapfenlager ähnlich dem Zapfenlager 13 oder auf Rollen erfolgen. Bei dieser Variante mit Boden muss allerdings berücksichtigt werden, dass die in der Schleuse 1 befindliche Person bei der Drehung mitbewegt wird. Dafür muss der Antrieb stärker ausgelegt sein.

Die Draufsicht in Fig. 3 verdeutlicht, dass die Erfindung bedarfsweise je nach Radius R eine größere Anzahl von Zugangs-/Abgangs-Sektoren 21 zulässt. Hier sind beispielhaft sechs Sektoren dargestellt. Außerdem braucht die Anordnung nicht regelmäßig -wie gezeichnet- zu sein. Auch können weniger als sechs bzw. vier Zugangs-/Abgangs-Sektoren 21 vorgesehen werden. Dies hat Vorteile bei der variablen Gestaltung des Grundrisses. Entsprechend der räumlichen Gegebenheiten können die Zugänge bzw. Abgänge gestaltet werden. Der Doppelpfeil in der Zeichnung soll den Zugang/Abgang im freien Sektor 21 durch den Schleusenzugang 11 darstellen.

Fig. 4 zeigt in einer Draufsicht den Grundriss des Vorderrumpfes eines Verkehrsflugzeugs mit Passagierkabine 6, mit Cockpit 3, mit einem Crew-Ruhe-Raum 4 und einer Toilette 5. In der gezeigten Aufteilung der Passagierkabine 6 ist durch die Anordnung der Toilette 5 und der Crew-Ruhe-Raum 4 ein Gang 62 zum Cockpitbereich gebildet. In diesen Gang ist erfindungsgemäß die als Schleuse 1 ausgebildete Zugangseinrichtung angeordnet. Die Schleuse 1 mit einem ungefähren Durchmesser von ca. 75 cm Durchmesser lässt sich in die vorhandene Raumeinteilung ohne weiteres integrieren und kann so die gewünschte Sicherheitsfunktion erfüllen. Wie aus der Zeichnung Fig. 4A ersichtlich, sind neben der in Fig. 4 gezeigten Schleusenposition drei weitere Schleusenpositionen möglich, wobei jeweils der offene Zugang 11 durch die Pfeildarstellung ersichtlich ist und gleichzeitig die Zugänge bei den drei anderen Zugangs-/Abgangssektoren gesperrt sind. Ebenso ersichtlich, dass der Zugang zum Raum 4 nicht in y-Richtung, sondern etwas schräg verläuft. Außerdem ermöglicht diese Gestaltung die Zuordnung des Innenraumes der Schleuse 1 entweder zur Toilette 5 oder zum Crew-Ruhe-Raum 4 nach Bedarf. Daraus resultiert eine Komfortverbesserung z.B. durch mehr Bewegungsfreiheit beim An- und Auskleiden, Platz für Lockerungsübungen oder eine Separation vom übrigen Geschehen.

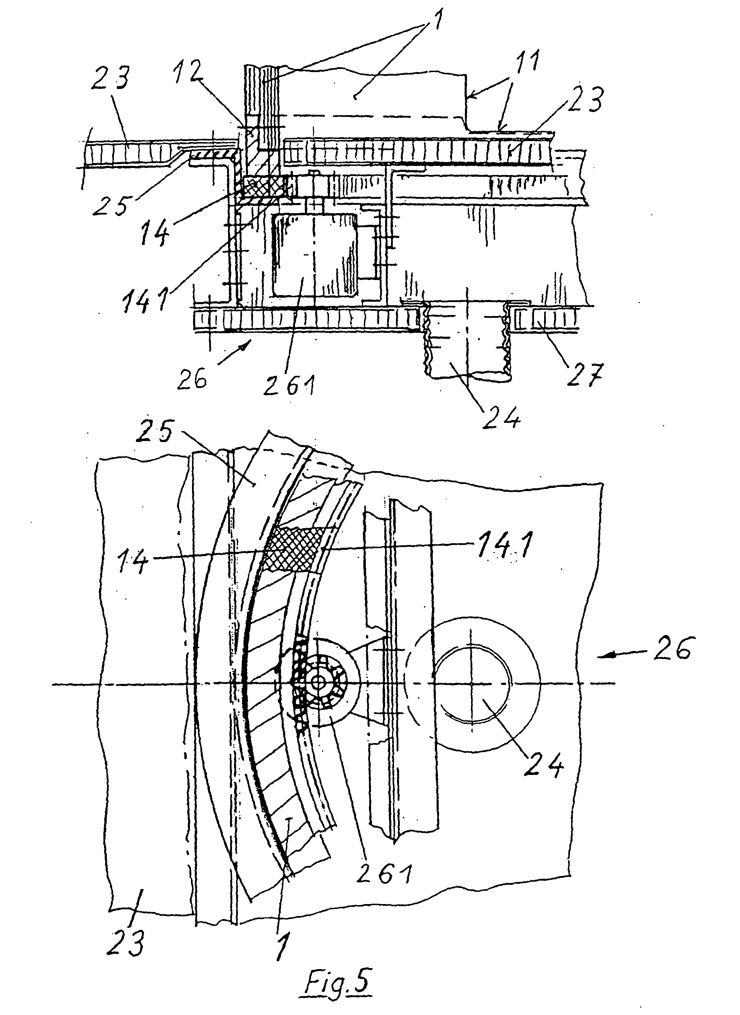

In Fig. 5 ist eine mögliche Ausführung der Schleuse1 im unteren Bereich mit einem Schleusenantrieb 26 in Auf- und Grundriss dargestellt. Das Ringprofil 12 der Schleuse 1 ist mit einem Gleitkörper 14 (z.B. hochfester Kunststoff) verbunden, der in einem ringförmigen Nutprofil 25 gelagert ist. Der Gleitkörper 14 weist zudem eine Innenverzahnung 141 auf, welche mit dem Ritzel des Antriebmotors 261 kämmt. Die Bewegung der Schleuse 1 erfolgt über ein Steuersignal, das der Antriebmotor 261 erhält, worauf die Verzahnung 141 in die gewünschte Position bewegt und dort beispielsweise über elektrisch betätigte Bolzen verriegelt wird. Das Steuersignal kann durch Betätigung eines Schalters, welches nur für das autorisierte Personal zugänglich ist, ausgelöst werden. Die vorgestellte Konstruktionslösung ist einfach und robust, wobei wegen der großen Übersetzung auch ein Zwischengetriebe vermieden werden kann. In weiteren Ausführungsformen sind jedoch auch andere Antriebsmittel für den Schleusenantrieb 26 möglich, beispielsweise kann die Drehung der Schleuse 1 auch durch manuelle Kraft erfolgen und eine Positionierung und Arretierung der Schleuse 1 an einem entsprechenden Zugangs/Ausgangssektor 21 erfolgt durch ansteuerbare Arretiermittel, wobei auch hier die Steuerung bzw. Auswahl des möglichen Zugangs/Ausgangs 21 nur von autorisiertem Personal vorgenommen wird.
Selbstverständlich kommen neben diesen Lösungen des Schleusenantriebs 26 und -lagerung noch weitere Konstruktionsvarianten infrage, wie beispielsweise das Vorsehen eines Antriebs im Bereich des oberen Zapfenlagers 13 oder die Ausbildung eines Schleusenkörpers mit integrierter Bodenplatte. Diese Varianten benutzen jedoch alle das grundsätzliche Prinzip der Erfindung.

Zur Gewährleistung der weitgehenden Druckdichtigkeit der Schleuse 1 dient zum einen die o.g. Druckkraft P (siehe Fig. 2), welche den Gleitkörper 14 in das Nutprofil 25 presst, zum anderen ist gemäß der Darstellung in Fig. 5 ein unteres Druckschott 27 vorgesehen. Zusammen mit der Abdichtung 29 (siehe Fig. 6), welche um die Schleusenöffnung 11 eines Zugangs-/Ausgangssektors 21 herumläuft, lässt sich so Druckdichtigkeit gewährleisten und der Schleusenraum mittels der Luftleitung 24 evakuieren.

Zur wirkungsvollen Abwehr von Eindringlingen in Flugzeugen ist es weiterhin von Vorteil, neben einer zeitlich begrenzten Sperrung der Luftzufuhr oder Verminderung des Sauerstoffgehalts in der Schleuse 1 durch einen Druckausgleich mit der Außenatmosphäre alternativ oder zusätzlich Betäubungsmittel, beispielsweise Reizgas einzubringen. Das notwendige Versorgungsdepot sowie die Betätigungseinrichtung ist vorzugsweise im Cockpitbereich vorzusehen, um den Gebrauch nur vom autorisierten Personal sicherzustellen. Die Zuführung kann über Düsen im Decken- oder Fußbodenbereich oder über vorhandene Klimaversorgungsleitungen erfolgen. Die erforderlichen Maßnahmen, um den Schleusenraum 1 gegenüber den angrenzenden Räumlichkeiten 3, 4, 5 und 6 abzudichten, sind bereits im wesentlichen genannt oder werden nachfolgend in der Fig. 6 aufgezeigt. Wie bereits beschrieben, wird durch Anpressen des Gleitkörpers 14 auf das Nutprofil 25 und mittels Druckschott 27 der untere Schleusenbereich abgedichtet.

In Fig. 6 ist dargestellt, auf welche Weise auch der Schleusenzugang 11 abgedichtet werden kann. Zunächst verfährt die Schleuse 1 in einen bestimmten Zugangs/Ausgangs-Sektor 21 und wird dort verriegelt. Der Eingang zum betreffenden Raum, beispielsweise die Toilette 5, ist von einem umlaufenden Türprofil 28 umgeben, in dem ein aufblasbarer Dichtungsschlauch 29 (siehe Fig. 6A) eingelegt ist. Befindet sich die Schleuse 1 in Position, wird der Schlauch 29 aufgepumpt und die Luftevakuierung kann beginnen. Der Raum 5 ist mit druckdichter Tür 51 versehen, wobei der Kabinenüberdruck (siehe Pfeile) in Richtung Schleuse 1 wirkt und sich die Türteile im Türprofil 28 abstützen. Hierdurch ist eine leichte Türkonstruktion möglich, auch wenn beachtliche Druckkräfte einwirken. Wegen der Schleusenpositionierung auf einen Sektor 21 benötigen die anderen Räumlichkeiten 3, 4 und 6 keine druckdichten Türen bzw. können offen bleiben, was Kosten und Gewicht spart.
Alternativ ist es möglich, dass die Schleusenöffnung 11 zum Erreichen der Druckdichtigkeit der Schleuse 1 in einen Bereich der Rahmenstruktur zwischen den Zugangs- /Ausgangssektoren 21 verfährt. Dies kann beispielsweise vorteilhaft sein, wenn es weniger als vier Zugänge/Ausgänge gibt und die Rahmenstruktur 2 zumindest bereichsweise entsprechend druckdicht ausgebildet ist.

Neben der möglichen druckdichten Abdichtung der Schleuse 1 kann als alternative Ausführungsform die Zugangseinrichtung 1 luftabdichtend ausgeführt sein, d.h. die Luftleitung 24 ist nicht erforderlich. Um einen Eindringling kampfunfähig zu machen, wird Betäubungsmittel in die Schleuse 1 eingeführt. Erforderlich ist es, einen Luftaustausch mit den angrenzenden Räumlichkeiten 3, 4, 5 und 6 zu verhindern und die dafür erforderlichen Dichtungsmaßnahmen einzusetzen. Möglichkeiten der Abdichtung wurden bereits zuvor ausführlich dargestellt und beschrieben.
Damit kann wirkungsvoll verhindert werden, dass das verwendete Betäubungsmittel nicht in die Raumluft für die Piloten, die Flugbegleiter oder die Passagiere gelangt.

## Patentansprüche

1. Zugangseinrichtung mit Sicherheitsschleuse zum Führerstand von Verkehrsmitteln, insbesondere zum Cockpit eines Verkehrsflugzeuges, wobei der Führerstand (3) über einen Zugangsbereich (62) mit der Passagierkabine (6) verbunden ist, und im Zugangsbereich (62) die Sicherheitsschleuse (1) vorgesehen werden kann die zylindrisch geformt und um ihre Längsachse innerhalb einer Rahmenstruktur (2) drehbar ist, **dadurch gekennzeichnet, dass** die Schleuse (1) einen Schleusenzugang (11) aufweist, deren Öffnung mit mindestens zwei Zugangs/Ausgangs-Sektoren (21) der Rahmenstruktur (2) korrespondiert, wobei der Schleusenzugang (11) in eine vorgewählte Sektor-Position der mindestens zwei Zugangs-/Ausgangssektoren (21) durch Drehen der Schleuse (1) um ihre Längsachse verfahrbar und arretierbar ist und gleichzeitig alle weiteren Zugangs/Ausgangs-Sektoren (21) für den Zugang/Ausgang gesperrt sind.

2. Zugangseinrichtung nach Anspruch 1, **dadurch gekennzeichnet, dass** der erste Zugangs-/Ausgangs-Sektor (21) der Rahmenstruktur (2) einen Zugang von der Passagierkabine (6) zur Schleuse (1) bildet, dass der zweite Zugangs-/Ausgangs-Sektor (21) einen Zugang vom Cockpit (3) zur Schleuse (1) bildet und zumindest ein weiterer Zugangs-/Ausgangs-Sektor (21) einen Zugang von mindestens einer benachbarten Einrichtung (4; 5) zu der Schleuse (1) bildet.

3. Zugangseinrichtung nach Anspruch 2, **dadurch gekennzeichnet, dass** die benachbarte Einrichtung als Toilettenraum (5) und/oder Crew-Ruhe-Raum (4) ausgebildet ist.

4. Zugangseinrichtung nach einem der Ansprüche 1 bis 3, **dadurch gekennzeichnet, dass** Zugangs-/Abgangssektoren (21) in der Rahmenstruktur (2) im Grundriß eine symmetrische Achsenausrichtung oder eine unregelmäßige Achsenausrichtung vorsehen.

5. Zugangseinrichtung nach einem der Ansprüche 1 bis 4, **dadurch gekennzeichnet, dass** die Schleuse (1) als zylindrische Glocke ausgebildet ist, die im Deckenbereich (61) in einem oberen Lager (13) gelagert ist.

6. Zugangseinrichtung nach einem der Ansprüche 1 bis 5, **dadurch gekennzeichnet, dass** die Lagerung des unteren Wandungsbereichs der Schleuse (1) mittels einer Ringnut (22) in der Bodenplatte (23) erfolgt und dort ein Antriebsmotor (261) auf eine Innenverzahnung (141) an der Schleusenwandung einwirkt.

7. Zugangseinrichtung nach einem der Ansprüche 1 bis 6, **dadurch gekennzeichnet, dass** der Schleusenantrieb (26) durch einen Getriebeantrieb am oberen Drehlager (13) erfolgt.

8. Zugangseinrichtung nach einem der Ansprüche 1 bis 6, **dadurch gekennzeichnet, dass** der Schleusenantrieb (26) als Rollenantrieb an der Schleusenwandung oder als Bandantrieb oder manuell erfolgt.

9. Zugangseinrichtung nach einem der Ansprüche 1 bis 8, **dadurch gekennzeichnet, dass** ansteuerbare Arretiermittel an der Schleuse (1) vorgesehen sind, die bei Erreichen der Schleusenposition an dem entsprechenden Zugangs-/Abgangssektor (21) die Position der Schleuse (1) sichern.

10. Zugangseinrichtung nach einem der Ansprüche 1 bis 9, **dadurch gekennzeichnet, dass** die Schleuse (1) als oben und unten mit Deckflächen geschlossener Hohlzylinder mit einem Schleusenzutritt (11) ausgebildet ist.

11. Zugangseinrichtung nach einem der Ansprüche 1 bis 10, **dadurch gekennzeichnet, dass** in Wirkverbindung zwischen Schleuse (1) und Rahmenkonstruktion (2) die Schleuse (1) druckdicht ausgeführt wird und das Schleusen-Luftvolumen mittels einer nach außen führenden Luftleitung (24) evakuierbar ist.

12. Zugangseinrichtung nach Anspruch 11, **dadurch gekennzeichnet, dass** die Druckabschottung der Schleuse (1) mittels Anpressdruck in der Ringnut (22), druckdichter Tür (51), Druckschott (27) und um den Schleusenzugang (11) herumlaufenden Dichtungsschlauch (29) erfolgt.

13. Zugangseinrichtung nach einem der Ansprüche 1 bis 12, **dadurch gekennzeichnet, dass** die Schleuse (1) mindestens luftabdichtend ausgeführt ist und Mittel zum Zuführen von Betäubungsmitteln vorgesehen sind.

14. Zugangseinrichtung nach einem der Ansprüche 1 bis 13, **dadurch gekennzeichnet, dass** die Schleuse (1) aus hochfestem, schusssicherem Material besteht.

## Claims

1. Entry facility with a security access lock for the driver's compartment of means of transport, in particular for the cockpit of a passenger aircraft, wherein the driver's compartment (3) is connected to the passenger cabin (6) via an entry area (62) and the security access lock (1), which is cylindrical in shape and is rotatable about its longitudinal axis within a frame structure (2), can be provided in said entry area (62), **characterised in that** the access lock (1) has an access-lock entry (11), the opening in which corresponds with at least two entry/exit sectors (21) in the frame structure (2), said access-lock entry (11) being capable of travelling into a preselected sector position of the at least two entry/exit sectors (21) by rotation of the access lock (1) about its longitudinal axis, and being capable of being arrested, and all the other entry/exit sectors (21) for the entry-exit being simultaneously blocked.

2. Entry facility according to claim 1, **characterised in that** the first entry/exit sector (21) in the frame structure (2) forms an entry from the passenger cabin (6) to the access lock (1), that the second entry/exit sector (21) forms an entry from the cockpit (3) to the access lock (1), and at least one other entry/exit sector (21) forms an entry from at least one adjoining facility (4; 5) to the access lock (1).

3. Entry facility according to claim 2, **characterised in that** the adjoining facility is constructed as a toilet compartment (5) and/or crew rest-room (4).

4. Entry facility according to one of claims 1 to 3, **characterised in that** entry/exit sectors (21) in the frame structure (2) provide, in ground plan, a symmetrical axial orientation or an irregular axial orientation.

5. Entry facility according to one of claims 1 to 4, **characterised in that** the access lock (1) is constructed as a cylindrical bell which is mounted in an upper bearing (13) in the ceiling area (61).

6. Entry facility according to one of claims 1 to 5, **characterised in that** the mounting of the lower wall area of the access lock (1) takes place by means of an annular groove (22) in the base plate (23) and a driving motor (261) acts, at that point, on an internal toothing system (141) on the access-lock wall.

7. Entry facility according to one of claims 1 to 6, **characterised in that** the access-lock drive (26) is provided by a geared drive on the upper pivot bearing (13).

8. Entry facility according to one of claims 1 to 6, **characterised in that** the access-lock drive (26) is provided in the form of a roller drive on the access-lock wall or in the form of a belt drive or manually.

9. Entry facility according to one of claims 1 to 8, **characterised in that** activatable arresting means, which lock the position of the access lock (1) when said position has reached the appropriate entry/exit sector (21), are provided on said access lock (1).

10. Entry facility according to one of claims 1 to 9, **characterised in that** the access lock (1) is constructed as a hollow cylinder which is closed at the top and bottom by means of covering surfaces and has an access-lock entrance (11).

11. Entry facility according to one of claims 1 to 10, **characterised in that** the access lock (1) is designed so as to be pressure-tight in the operative connection between said access lock (1) and the frame structure (2), and the air volume of the access lock can be evacuated by means of an air line (24) leading to the outside.

12. Entry facility according to claim 11, **characterised in that** the pressure-compartmentalisation of the access lock (1) takes place by means of contact pressure in the annular groove (22), a pressure-tight door (51), a pressure bulkhead (27) and a sealing hose (29) that runs round the access-lock entry (11).

13. Entry facility according to one of claims 1 to 12, **characterised in that** the access lock (1) is of at least air-sealing design and means are provided for feeding in stunning agents.

14. Entry facility according to one of claims 1 to 13, **characterised in that** the access lock (1) consists of high-strength, bulletproof material.

## Revendications

1. Dispositif d'accès à sas de sécurité pour l'accès au poste de pilotage de moyens de transport, en particulier au cockpit d'un avion de transport, le poste de pilotage (3) communiquant avec la cabine à passagers (6) via une zone d'accès (62) et le sas de sécurité (1) qui présente une conformation cylindrique et peut tourner autour de son axe longitudinal à l'intérieur d'une structure formant bâti (2) étant disposé à l'intérieur de la zone d'accès (62), **caractérisé par le fait que** le sas de sécurité (1) présente un accès de sas (11), dont l'ouverture coïncide avec au moins deux secteurs d'accès/sortie (21) de la structure formant bâti (2), l'accès de sas (11) pouvant être amené dans une position de secteur sélectionnée des secteurs d'accès/sortie (21) au nombre d'au moins deux par rotation du sas (1) autour de son axe longitudinal et bloqué dans cette position, tandis que simultanément tous les autres secteurs d'accès/sortie (21) sont condamnés en accès/sortie.

2. Dispositif d'accès selon la revendication 1, **caractérisé par le fait que** le premier secteur d'accès/sortie (21) de la structure formant bâti (2) forme un accès de la cabine à passagers (6) au sas (1), que le deuxième secteur d'accès/sortie (21) forme un accès du cockpit (3) au sas (1) et qu'au moins un secteur d'accès/sortie (21) supplémentaire forme un accès à au moins une installation (4, 5) voisine au sas (1).

3. Dispositif d'accès selon la revendication 2, **caractérisé par le fait que** l'installation voisine est un espace toilettes (5) et/ou un espace de repos (4) pour l'équipage.

4. Dispositif d'accès selon une des revendications 1 à 3, **caractérisé par le fait que** les secteurs d'accès/sortie (21) dans la structure formant bâti (2) en projection horizontale présentent une disposition symétrique ou une disposition non régulière de leurs axes.

5. Dispositif d'accès selon une des revendications 1 à 4, **caractérisé par le fait que** le sas (1) est conformé en cloche cylindrique qui, dans la région du plafond (61), est guidée dans un palier (13) supérieur.

6. Dispositif d'accès selon une des revendications 1 à 5, **caractérisé par le fait que** le guidage de la partie inférieure de la paroi de sas est réalisé au moyen d'une rainure annulaire (22) dans la panneau de sol (23) et qu'un moteur d'entraînement (261) agit sur une denture intérieure (141) prévue sur la paroi du sas.

7. Dispositif d'accès selon une des revendications 1 à 6, **caractérisé par le fait que** l'entraînement du sas (26) a lieu par un mécanisme d'entraînement au niveau du pivot (13) supérieur.

8. Dispositif d'accès selon une des revendications 1 à 6, **caractérisé par le fait que** l'entraînement du sas (6) est réalisé sous la forme d'un entraînement à galet agissant sur la paroi du sas, ou sous la forme d'un entraînement à courroie ou manuellement.

9. Dispositif d'accès selon une des revendications 1 à 8, **caractérisé par le fait que** des moyens de blocage commandés sont prévus sur le sas (1), lesquels moyens lorsque la position du sas en regard du secteur d'accès/sortie (21) concerné est atteinte, bloquent le sas (1) dans la position.

10. Dispositif d'accès selon une des revendications 1 à 9, **caractérisé par le fait que** le sas (1) est conformé en cylindre creux fermé vers le haut et vers le bas par des surfaces de fermeture et pourvu d'un accès de sas (11).

11. Dispositif d'accès selon une des revendications 1 à 10, **caractérisé par le fait que** le sas (1), en ce qui concerne l'interaction entre le sas (1) et la structure formant bâti (2), est étanche à la pression et que le volume d'air du sas peut être évacué à l'aide d'une conduite d'air (24) menant à l'extérieur.

12. Dispositif d'accès selon la revendication 11, **caractérisé par le fait que** l'isolement du sas (1) est réalisé par une pression appliquée dans la rainure annulaire (22), une porte (51) étanche à la pression, une cloison (27) étanche à la pression et un joint souple (29) tout autour de l'accès de sas (11).

13. Dispositif d'accès selon une des revendications 1 à 12, **caractérisé par le fait que** le sas (1) est au moins étanche à l'air et que des moyens pour introduire des substances anesthésiantes.

14. Dispositif d'accès selon une des revendications 1 à 13, **caractérisé par le fait que** le sas (1) est réalisé en matériau à haute résistance, résistant aux balles.
